# EUROPÄISCHE PATENTSCHRIFT

(11) **EP 3 685 126 B1**
(45) Veröffentlichungstag und Bekanntmachung des Hinweises auf die Patenterteilung: **18.05.2022**
(21) Anmeldenummer: 18779572.9
(22) Anmeldetag: 14.09.2018
(51) Int. Cl.: G01F 1/66, G01F 15/18, G01N 29/24, G01F 15/14

(54) **SENSORVORRICHTUNG**
SENSOR DEVICE
DISPOSITIF DE CAPTEUR

(30) Priorität: 20.09.2017 DE 202017105712 U
(43) Veröffentlichungstag der Anmeldung: 29.07.2020
(73) Patentinhaber: Rosen Swiss AG, 6370 Stans (CH)
(72) Erfinder: BAUERMANN, Rainer, 49808 Lingen (Ems) (DE); BRÜCHER, Martin, 48488 Lingen (Ems) (DE); RODRIGUEZ, Natalia, NL-7522 CR Enschede (NL)
(74) Vertreter: Wischmeyer, André
(86) Internationale Anmeldenummer: PCT/EP2018/074954
(87) Internationale Veröffentlichungsnummer: WO 2019/057642

(56) Entgegenhaltungen:
- WO-A1-2012/129101
- CN-B- 104 874 538
- CN-U- 205 703 835
- DE-A1-102011 015 677
- DE-B3-102005 052 550
- JP-A- 2014 115 128
- US-A1- 2010 259 252

## Beschreibung

Die Erfindung betrifft eine Sensorvorrichtung zur Montage an einem von einem Medium durchströmten Objekt, insbesondere an einer Pipeline. Die Sensorvorrichtung umfasst zumindest eine Wandlereinrichtung mit zumindest einem biegsamen Wandlerelement. Das Wandlerelement weist zumindest ein elektrisch leitfähiges Leiterelement auf und ist zur abschnittsweisen Umhüllung des Objektes in eine Betriebsstellung überführbar, in der es zumindest teilweise um eine Längsachse des Objektes angeordnet ist und straff an einer Oberfläche des Objektes anliegt.

In der Betriebsstellung liegt das biegsame Wandlerelement straff an der Oberfläche des Objektes an, so dass das Leiterelement im Wesentlichen einen konstanten Abstand zum Objekt hat. Dabei kann das Wandlerelement unmittelbar auf der Oberfläche des Objektes aufliegen oder, beispielsweise durch einen zwischenliegenden Isolator, vom Objekt beabstandet sein. In Betriebsstellung umhüllt das Wandlerelement das Objekt entlang seines Umfangs zumindest teilweise.

Eine derartige Sensorvorrichtung ist bekannt aus der Offenlegungsschrift DE 10 2011 015 677 A1, welche einen akustischen Durchflussmesser offenbart. Dabei wird eine mit einem elektrischen Leiter versehene Folie oder ein Flachbandkabel um ein Rohr gewickelt, wobei der Leiter mäanderförmig angeordnet ist. Nach der Montage der Wandlereinrichtung wird das Wandlerelement durch eine Haltevorrichtung in seiner Position gehalten.

Im Betrieb der Sensorvorrichtung wirkt die Wandlereinrichtung zur Umwandlung eines Signals. Dabei wirken das Leiterelement und das von einem Medium durchströmte Objekt aufeinander ein. Anwendung finden derartige Sensorvorrichtungen beispielsweise zur Erzeugung oder zur Detektion von Schallwellen etwa zur Messung von Flussraten oder Materialfehlern des Objektes. Dazu werden gemäß dem Stand der Technik Magnetfelder genutzt, die das Objekt durchsetzen.

Von einem Medium durchströmte Objekte wie Pipelines können sich im Betrieb entsprechend der Temperatur des durchströmenden Mediums erwärmen. Folge einer solchen Temperaturerhöhung ist eine Ausdehnung des Materials, aus dem das Objekt besteht. Bei Rohrleitungen bewirkt diese Ausdehnung in der Regel eine Zunahme des Rohrleitungsdurchmessers.

Vorbezeichnete Sensorvorrichtungen mit einer Haltevorrichtung, die das Wandlerelement in ihrer Betriebsstellung hält, können nur bei gleichbleibenden Rohrdurchmessern eine sichere Funktion gewährleisten. Da die Haltevorrichtung das Wandlerelement in der bei der Montage eingestellten Position fixiert, führt eine Änderung der Form des Objektes zu einem Lösen des Wandlerelementes von der Haltevorrichtung bzw. zu einer Schädigung der Wandlereinrichtung. Insbesondere bei einer Verkleinerung des Objektdurchmessers kann folglich keine straffe Positionierung des Wandlerelementes in der Betriebsstellung gewährleistet werden, welche eine optimale Funktion der Sensorvorrichtung ermöglicht.

Weiterer Nachteil von bekannten Sensorvorrichtungen ist ihr Aufbau, durch welchen die Montage anspruchsvoll und ihre Bauteile auf die Anwendung an Objekten eines spezifischen Querschnitts begrenzt sind.

Aufgabe der vorliegenden Erfindung ist die Bereitstellung einer einfach zu montierenden Sensorvorrichtung mit einer erhöhten Funktionssicherheit.

Die Aufgabe wird gelöst durch einen Gegenstand nach Anspruch 1. Vorteilhafte Ausgestaltungen der Erfindung sind den Unteransprüchen zu entnehmen Erfindungsgemäß wird die Aufgabe durch eine Sensorvorrichtung gelöst, dessen wenigstens eine Wandlervorrichtung eine Rückstellvorrichtung mit zumindest einem am Wandlerelement angeordneten Übertragungselement aufweist. Die Rückstellvorrichtung weist außerdem einen Kraftspeicher auf. Die Rückstellvorrichtung ist zum Einstellen und/oder Rückstellen des Wandlerelementes in die Betriebsstellung bei Veränderungen des Durchmessers des Objektes im montierten Zustand der Sensorvorrichtung vorgesehen.

Das Übertragungselement überträgt auf das Wandlerelement eine Kraft zur Positionierung dessen in seiner Betriebsstellung. Die Kraft wirkt als Zug- oder Druckkraft auf das Wandlerelement und vorzugsweise zumindest anteilig in eine relativ zur Längsachse tangentiale Richtung, d. h. die Kraft verläuft bezüglich einer Kreisbahn um die Längsachse in eine tangentiale Richtung. Alternativ wirkt die Kraft auf das Wandlerelement in eine radiale Richtung. Das Übertragungselement ist dabei selbst elastisch oder starr ausgebildet. Die Rückstellvorrichtung ist an der Wandlervorrichtung oder einem weiteren Teil der Sensorvorrichtung angeordnet.

Die Längsachse fällt in der Betriebsstellung des Wandlerelementes mit der Längsmittelachse des durchströmten Objektes zusammen. Sie verläuft insbesondere parallel zur Hauptströmungsrichtung. In der Betriebsstellung korrespondiert die Form zumindest eines Oberflächenteils des Wandlerelementes mit der Form eines Oberflächenabschnittes des Objektes, an welchem die Sensorvorrichtung montiert wird. Dieser Oberflächenabschnitt wird durch das Wandlerelement insofern abgedeckt, als dass es entweder unmittelbar an der Oberfläche des Objektes anliegt oder davon beabstandet ist, wobei das Leiterelement auf dem Wandlerelement vorzugsweise einen im Wesentlichen konstanten Abstand von dem Oberflächenabschnitt hat.

Das Leiterelement verläuft in der Betriebsstellung des Wandlerelementes zumindest abschnittsweise in einer Umfangsrichtung relativ zur Längsachse. Dabei verläuft das Leiterelement insbesondere vollumfänglich um die Längsachse oder mäanderförmig auf dem Wandlerelement.

Bei der Montage der Sensorvorrichtung wird der Oberflächenabschnitt des Objektes mit dem Wandlerelement abgedeckt und das Übertragungselement an dem Wandlerelement angeordnet. Bei der Montage sorgt die Rückstellvorrichtung für eine zuverlässige Einstellung des Wandlerelementes in die Betriebsstellung. Dabei liegt das Wandlerelement unmittelbar oder mittelbar, d. h. mit einem Abstand zum Objekt, hergestellt etwa durch eine Zwischenlage, straff an der Objektoberfläche an. Bei Veränderungen des Durchmessers des Objektes im montierten Zustand der Sensorvorrichtung, etwa bei einer Verkleinerung des Objektdurchmessers, bewirkt die Rückstellvorrichtung ein Rückstellen des Wandlerelementes in die Betriebsstellung. Andererseits ist eine Nachgiebigkeit der Anordnung des Wandlerelementes gegeben, wenn sich der Durchmesser des durchströmten Objektes vergrößert.

Durch die Rückstellvorrichtung zeichnet sich die Sensorvorrichtung durch eine erhöhte Funktionssicherheit aus, da die optimale Positionierung des Wandlerelementes in der Betriebsstellung auch bei einer Relativbewegung des Objektes gewährleistet wird. Außerdem wird das Wandlerelement durch die Rückstellvorrichtung weitgehend selbstständig in die Betriebsstellung eingestellt, was die Montage der Sensorvorrichtung vereinfacht.

Vorzugsweise ist das Wandlerelement biegeelastisch. Dadurch kann das Wandlerelement bzw. die Wandlervorrichtung mehrfach und an Objekten mit unterschiedlichen Durchmessern und Formen eingesetzt werden. Außerdem erleichtert die Elastizität die Rückstellung des Wandlerelementes und erhöht damit dessen Funktionssicherheit.

Bevorzugt weist die erfindungsgemäße Sensorvorrichtung eine lösbar an der Wandlervorrichtung festgelegte Trägervorrichtung auf, die zur Abstützung der Sensorvorrichtung am Objekt dient. Die Wandlervorrichtung wird dabei zumindest teilweise von einem Gehäuse umgeben.

Die Trägervorrichtung wird bei der Montage der Sensorvorrichtung am Objekt festgelegt. Sie verhindert eine Relativbewegung von Objekt und Sensorvorrichtung in eine zur Längsachse parallele Richtung. Die lösbare Festlegung der Wandlervorrichtung an der Trägervorrichtung vereinfacht die Montage der Wandlervorrichtung insofern, als dass sich die Wandlervorrichtung an der Trägervorrichtung abstützt und dadurch das das Objekt abschnittsweise abdeckende Wandlerelement nicht überlastet wird. Insbesondere können die einzelnen Teile der Sensorvorrichtung nacheinander angebaut werden. Der modulare Aufbau der Sensorvorrichtung aus Wandlervorrichtung und Trägervorrichtung ermöglicht außerdem den einfachen Austausch einzelner Komponenten der Sensorvorrichtung und erhöht damit die Funktionssicherheit. Insbesondere können Trägervorrichtungen, deren Einsatz maßgeblich von der Form und dem Ausmaß des Objektes abhängt, mit unterschiedlichen Wandlervorrichtungen kombiniert werden, deren Auswahl wiederum von der zu messenden Größe und etwa den Materialeigenschaften des Objektes abhängt.

Das Gehäuse schützt die Sensorvorrichtung vor Umwelteinflüssen. Es umgibt die Wandlervorrichtung insofern teilweise, als dass zumindest ein Bereich der Wandlervorrichtung zwischen zwei Abschnitten des Gehäuses liegt. Das Gehäuse hat einen ein- oder mehrteiligen Aufbau und wird insbesondere von der Trägervorrichtung zumindest mitausgebildet. Die Wandlervorrichtung ist zumindest teilweise zwischen dem Gehäuse und dem Objekt angeordnet. Das Gehäuse dient der Abschirmung der Sensorvorrichtung von der Umgebung und schützt somit seine Funktionselemente. Dadurch, dass die Wandlervorrichtung und das Gehäuse getrennt voneinander ausgebildet sind, können sie in besonders einfacher Weise nacheinander am Objekt montiert werden.

Bevorzugt ist das Gehäuse zur Umgebung der Wandlervorrichtung und der Längsachse in Umfangsrichtung um mindestens 180° ausgebildet, so dass eine gedachte, zur Längsachse rechtwinklige und diese schneidende Gerade das Gehäuse beidseitig von der Längsachse schneidet. Besonders bevorzugt umgibt das Gehäuse die Wandlervorrichtung vollumfänglich. Durch diese Ausbildung des Gehäuses wird die Wandlervorrichtung besonders zuverlässig vor Umwelteinflüssen geschützt.

In einer vorteilhaften Ausgestaltung der Erfindung hat das Gehäuse in Richtung der Längsachse eine größere Erstreckung als die Trägervorrichtung. Dabei wird das Gehäuse zumindest nicht ausschließlich durch die Trägervorrichtung ausgebildet. Die größere Erstreckung des Gehäuses in Richtung der Längsachse erlaubt einen vollständigen Einschluss des Wandlerelementes auch in relativ zur Längsachse axialer Richtung, wobei das Gehäuse an Stirnseiten der Sensorvorrichtung an das Objekt angrenzen kann. Durch diese Form des Gehäuses wird die Wandlervorrichtung besonders gut von der Umgebung getrennt und Umwelteinflüsse minimiert.

Vorzugsweise weist die Trägervorrichtung eine die Wandlervorrichtung zumindest teilweise umschließende Aufnahmeeinrichtung auf. Die Wandlervorrichtung wird durch die Aufnahmeeinrichtung abgestützt, durch dessen Form die Wandlervorrichtung zumindest in einem Abschnitt eingefasst wird. Bevorzugt hat die Aufnahmeeinrichtung einen U-förmigen Querschnitt, und die Wandlervorrichtung wird an der Aufnahmeeinrichtung lösbar fixiert. Durch die teilweise Umschließung der Wandlervorrichtung wird diese mechanisch besonders effektiv geschützt. Eine Fixierung der Wandlervorrichtung an der Aufnahmeeinrichtung ermöglicht zudem eine Entlastung des Wandlerelementes, was dessen Funktionsdauer verlängert.

Bevorzugt wird das Gehäuse von der Aufnahmeeinrichtung der Trägervorrichtung mit ausgebildet. Dabei grenzt die Aufnahmeeinrichtung an die Umgebung und verringert durch seine doppelte Funktion, als Gehäuseteil und zur Abstützung der Wandlervorrichtung, den Aufwand zur Montage des Gehäuses und das Ausmaß und/oder die Anzahl der dazu nötigen weiteren Teile.

Besonders bevorzugt ist durch die Wandlervorrichtung und die Trägervorrichtung, insbesondere die Aufnahmeeinrichtung, eine Wandlerführungsanordnung ausgebildet. Durch diese sind die Wandlervorrichtung und die Trägervorrichtung, insbesondere die Aufnahmeeinrichtung, relativ zueinander parallel zur Längsachse verschiebbar und fixierbar. In einer vorteilhaften Ausführungsform sind die Wandlervorrichtung und die Trägervorrichtung außerdem in eine weitere Richtung quer zur Längsachse verschiebbar und fixierbar. Besonders bevorzugt weist die Wandlerführungsanordnung zumindest ein Langloch mit einem Führungsstift und/oder einer Schraube auf. Die Wandlervorrichtung ist dadurch in einer variablen Position an der Trägervorrichtung festzulegen. Die optimale Position der Wandlervorrichtung, in der deren Funktionssicherheit am größten ist, lässt sich bei der Montage der Wandlervorrichtung durch die Wandlerführungsanordnung einfach einstellen. Insbesondere bleibt die Wandlervorrichtung nach der Festlegung der Trägervorrichtung am Objekt axial variabel positionierbar.

Bevorzugt ist innerhalb des Gehäuses eine wärmeisolierendes Isoliermittel angeordnet. Das Isoliermittel besteht überwiegend aus PVC, Glasfasern bzw. Glaswolle, Steinwolle, Aluminium, Kautschuk oder einem Schaum. Durch das Isoliermittel wird die Erwärmung des Gehäuses bei einer höheren Temperatur des Objektes begrenzt, wodurch das Gehäusematerial weniger belastet wird. Außerdem wird die Wandlervorrichtung durch das Isoliermittel geschützt. Dadurch ist die Funktionssicherheit der Sensorvorrichtung erhöht.

In einer vorteilhaften Ausgestaltung der Erfindung umfasst die Trägervorrichtung zumindest eine in eine Klemmstellung überführbare Klemmeinrichtung zur lösbaren Festlegung der Sensorvorrichtung am Objekt. Die Klemmeinrichtung umfasst zumindest zwei Klemmelemente. Die Klemmelemente liegen unmittelbar am Objekt an und bewirken eine vorzugsweise kraftschlüssige Verbindung zwischen Objekt und Klemmeinrichtung. Durch die Klemmung der Trägervorrichtung am Objekt ist die Montage der Sensorvorrichtung besonders einfach. Die kraftschlüssige Verbindung erlaubt eine zerstörungsfreie Anbringung der Sensorvorrichtung und ermöglicht eine zuverlässige Funktion sowohl der Sensorvorrichtung als auch des Objektes. Die Klemmeinrichtung kann zuerst montiert werden, woraufhin anschließend die weiteren Teile montiert werden können.

Bevorzugt weist die Trägervorrichtung zumindest zwei Klemmeinrichtungen auf, welche relativ zur Längsachse in axialer Richtung voneinander beabstandet sind. Dadurch ist die Sensorvorrichtung besonders stabil am Objekt festlegbar und dessen Funktion besonders sicher.

Vorzugsweise ist das erste Klemmelement relativ zum zweiten Klemmelement schwenkbar angeordnet. Die Klemmeinrichtung ist somit vom Objekt lösbar, ohne dass die Klemmelemente vollständig voneinander getrennt werden müssen. Das Verschwenken des ersten Klemmelementes relativ zum zweiten ermöglicht eine besonders einfache Montage sowie Demontage der Sensorvorrichtung. Bevorzugt ist die Schwenkachse dabei parallel zur Längsachse der Sensorvorrichtung angeordnet, um einen für die Demontage der Sensorvorrichtung geringstmöglichen minimalen Schwenkwinkel zu verwirklichen und damit den Arbeitsaufwand zu minimieren.

Bevorzugt umfasst die Klemmeinrichtung eine die Klemmelemente nach deren Überführung in die Klemmstellung relativ zueinander verrastende Rastanordnung. Nach einem ausreichenden Verschwenken der Klemmelemente zueinander und um das Objekt sorgt diese für ein Einrasten der Klemmelemente relativ zueinander, sobald diese sich in Klemmstellung oder einer in etwa der Klemmstellung entsprechenden Position befinden. Verrastet wird zumindest ein entgegengesetztes Verschwenken bis zu einem gewissen Grad an Kraftaufwand verhindert. Dadurch wird die Montage der Klemmeinrichtung am Objekt vereinfacht.

Besonders bevorzugt umfasst die Klemmeinrichtung alternativ oder zusätzlich eine die Klemmelemente vorspannende Vorspannvorrichtung. Durch diese wird die Klemmstellung durch eine Vorspannung der Klemmelemente gegenüber einander hergestellt oder gesichert. Vorzugsweise dient dazu eine Schraube, durch welche die Klemmeinrichtung selbsthemmend festgelegt werden. Durch die Vorspannvorrichtung wird eine besonders zuverlässige Positionierung der Sensorvorrichtung am Objekt sichergestellt.

In einer vorteilhaften Ausgestaltung der Erfindung weist die Klemmeinrichtung zumindest zwei Klemmstege zur Abstützung der Klemmeinrichtung am Objekt auf. Die Klemmstege sind an dem Objekt zugewandten Flächen der Klemmeinrichtung angeordnet und liegen in der Klemmstellung am Objekt an. Die Klemmstege sind gleichzeitig die einzigen Elemente der Klemmeinrichtung, welche das Objekt kontaktieren. In der Klemmstellung haben die Klemmstege bezogen auf die gesamte Trägervorrichtung den geringsten Abstand zur Längsmittelachse des Objektes bzw. zur Längsachse. Vorzugsweise weist jedes Klemmelement genau zwei Klemmstege auf. Diese sind jeweils in den Klemmelementbereichen angeordnet, die in Umfangsrichtung an das andere Klemmelement grenzen. Somit liegen in Klemmstellung zwei Klemmstege jeweils benachbart zueinander und gegenüber von zwei weiteren Klemmstegen, wobei die jeweils benachbarten von unterschiedlichen Klemmelementen ausgebildet sind. Durch diese ist eine lokal begrenzte Krafteinleitung der Klemmeinrichtung auf das Objekt bei guter Klemmstabilität möglich. Dadurch ist die Klemmeinrichtung besonders zuverlässig positioniert und unempfindlich gegen Umfangsänderungen des Objektes ist.

Vorzugsweise bilden die Klemmeinrichtung und die Aufnahmeeinrichtung eine Aufnahmeführungsanordnung aus, durch die sie relativ zueinander parallel zur Längsachse verschiebbar und fixierbar sind. Insbesondere sind sie zusätzlich quer zur Längsachse verschiebbar. Bevorzugt ist die Aufnahmeführungsanordnung durch ein Langloch sowie einen Führungsstift und/oder eine Schraube ausgestaltet. Die Verschiebbarkeit der Klemmeinrichtung relativ zur Aufnahmeeinrichtung erleichtert die Montage der Sensorvorrichtung insofern, als dass die Klemmeinrichtung mit einer signifikanten Toleranz in relativ zur Längsachse axialer Richtung am Objekt montiert werden kann, ohne dass davon die exakte Position des Wandlerelementes abhängig ist. Somit erfolgt die Montage besonders schnell und unter Nutzung eines lokal optimalen Objektoberflächenabschnittes.

Bevorzugt hat die Sensorvorrichtung zumindest eine Magnetisierungseinrichtung zur Erzeugung eines statischen oder quasi-statischen Magnetfeldes. Unter einem quasi-statischen Magnetfeld wird ein Magnetfeld verstanden, welches in den Berechnungen gegenüber einem durch das Leiterelement, an dem im Betrieb eine Wechselstromquelle anliegt, erzeugten hochfrequenten Magnetfeld als statisch angesehen werden kann. Insbesondere variiert ein quasi-statisches Magnetfeld mit einer Frequenz < 200 Hz, bevorzugt < 10 Hz. So können auch elektromagnetisch erzeugte Magnetfelder als statisch angesehen werden. Durch die Magnetisierungseinrichtung ist es im Zusammenwirken mit dem Leiterelement möglich, Ultraschallwellen im Objekt zu erzeugen. Die Magnetisierungseinrichtung ist vorzugsweise am Trägerelement oder am Gehäuse angeordnet. Alternativ ist die Magnetisierungseinrichtung an der Wandlereinrichtung angeordnet. Durch die integrierte Erzeugung des Magnetfeldes ist die Funktion der Sensorvorrichtung gegenüber einer solchen mit einer Nutzung eines extern bewirkten Magnetfeldes besonders zuverlässig.

Bevorzugt ist die Magnetisierungseinrichtung insbesondere mittels zumindest einer Klemmverbindung lösbar an der Trägervorrichtung festgelegt. Die Festlegung der Magnetisierungseinrichtung an der Trägervorrichtung ermöglicht einen besonders einfachen und modularen Aufbau der Sensorvorrichtung und damit eine einfachere Montage. Die Stabilität ist durch die Anordnung unmittelbar an der Trägervorrichtung größtmöglich. Die Festlegung erfolgt mittels einer Klemmverbindung, welche durch ein elastisches Bauteil entweder als Teil der Trägervorrichtung oder als Teil der Magnetisierungseinrichtung verwirklicht wird. Insbesondere weist die Magnetisierungseinrichtung zumindest zwei sich gegenüberliegende elastische Abschnitte auf, die in montiertem Zustand der Magnetisierungseinrichtung ein starres Element der Trägervorrichtung umgreifen. Dabei ist die Klemmverbindung rein durch Aufschieben der Magnetisierungseinrichtung in radialer Richtung auf das starre Element herzustellen. Durch die Klemmverbindung ist die Magnetisierungseinrichtung besonders einfach festlegbar und lösbar, wodurch sowohl die Montage als auch die Demontage der Sensorvorrichtung vereinfacht ist.

Besonders bevorzugt weist die Magnetisierungseinrichtung mindestens einen Magneten auf. Dieser ist entweder ein Permanentmagnet oder ein Elektromagnet. Insbesondere weist die Magnetisierungseinrichtung zwei in einer zur Längsachse parallelen Richtung voneinander beabstandete Magneten auf. Durch diese Magneten ist die Erzeugung des Magnetfeldes besonderes funktionssicher möglich. Durch eine Mehrzahl von axial voneinander beabstandeten Magneten hat die Sensorvorrichtung einen besonders großen Funktionsumfang, der durch den Aufbau besonders zuverlässig einsetzbar ist.

In einer vorteilhaften Ausgestaltung der Erfindung ist durch den Magneten und einen Magnetträger der Magnetisierungseinrichtung eine Magnetführungsanordnung ausgebildet. Durch diese sind der Magnet und der Magnetträger relativ zueinander parallel zur Längsachse verschiebbar und fixierbar. Somit kann der Magnet bezüglich der Wandlereinrichtung optimal und stückweise unabhängig von der Position der Trägervorrichtung positioniert werden.

Vorzugsweise sind zumindest zwei, insbesondere zumindest vier relativ zur Längsachse in Umfangsrichtung voneinander beabstandete Magnetisierungseinrichtungen an der Klemmeinrichtung angeordnet. Die Mehrzahl an Magnetisierungseinrichtungen haben dabei im montierten Zustand einen im Wesentlichen gleichen Abstand zur Oberfläche des Objektes. Das Wandlerelement ist zwischen den Magnetisierungseinrichtungen und dem Objekt angeordnet. Die Mehrzahl der Magnetisierungseinrichtungen erlaubt die Ausbildung eines weitgehend homogenen Magnetfeldes im Bereich der durch das Wandlerelement abgedeckten Objektoberfläche. Dadurch ist insbesondere die Ausbildung von Schallwellen im Objekt besonders zuverlässig möglich.

Erfindungsgemäß weist die Rückstellvorrichtung einen Kraftspeicher auf. Besonders bevorzugt weist der Kraftspeicher zumindest eine Feder oder einen elastischen Kunststoff auf und ist insbesondere an der Wandlereinrichtung angeordnet. Dadurch ist die vom Übertragungselement übertragene Kraft weitgehend proportional zur Auslenkung der Rückstellvorrichtung, was die Rückstellfunktion besonders zuverlässig macht. In einer vorteilhaften Ausgestaltung der Erfindung sind das Übertragungselement und der Kraftspeicher einteilig ausgebildet. Der Kraftspeicher dient der Bereitstellung der zur Ein- bzw. Rückstellung des Wandlerelementes nötigen Kraft. Durch diesen ist somit die Funktionssicherheit der Sensorvorrichtung erhöht. Damit wird die Rückstellung des Wandlerelementes besonders zuverlässig erreicht.

Vorzugsweise umfasst die Wandlervorrichtung eine das Wandlerelement klemmend festlegende Anschlussvorrichtung. Durch die Klemmung des Wandlerelementes kann dieses zerstörungsfrei an der Anschlussvorrichtung festgelegt werden. Die Anschlussvorrichtung dient besonders bevorzugt zur Festlegung des Kraftspeichers und wird bevorzugt von der Aufnahmeeinrichtung teilweise umschlossen. Durch die Klemmung kann das Leiterelement besonders zuverlässig an eine Stromquelle angeschlossen werden.

Bevorzugt weist die Anschlussvorrichtung einen Vergussbereich auf. Innerhalb dessen ist das Leiterelement mit mindestens einem Endbereich an ein dessen Signal übertragendes, weiteres leitendes Bauteil angeordnet. Der Kontaktbereich von Leiterelement und dem weiteren Bauteil ist nach deren Verbindung insbesondere durch einen Kunststoff vergossen, durch den die leitenden Bereiche vollständig gegenüber der Umgebung isoliert sind. Durch den Vergussbereich ist insbesondere ein Hohlraum, innerhalb dessen der Endbereich des Leiterelementes bzw. der Kontaktbereich liegt, durch ein erstarrtes Material ausgefüllt. Ein Eindringen von Feuchtigkeit oder anderen Umwelteinflüssen und deren Kontakt zum Leiterelement und dem Kontaktbereich wird somit besonders effektiv vermieden. Dadurch wird eine Langlebigkeit der Verbindung sichergestellt und die Funktionssicherheit der Sensorvorrichtung erhöht.

In einer vorteilhaften Ausgestaltung der Erfindung hat die Sensorvorrichtung zumindest zwei in einer zur Längsachse parallelen Richtung voneinander beabstandete Wandlervorrichtungen. Insbesondere ist jeder der Wandlervorrichtungen eine Mehrzahl von in Umfangsrichtung voneinander beabstandeten Magneten zugeordnet. Durch die Mehrzahl an Wandlervorrichtungen ist der Funktionsumfang der Sensorvorrichtung erweitert und die Montage insofern vereinfacht, als dass jede Wandlervorrichtung je nach Messaufbau nur eine Funktion ausübt, dadurch geringer belastet wird und bei Auftreten eines Fehlers einzeln ausgetauscht werden kann.

Bevorzugt ist das Übertragungselement so an der Wandlervorrichtung angeordnet, dass das Wandlerelement mit einer Kraft in im Wesentlichen tangentialer Richtung beaufschlagt ist. Das Übertragungselement ist dabei insbesondere an der Anschlussvorrichtung abgestützt. Durch die Wirkung der Kraft in eine der Haupterstreckungsrichtungen des Wandlerelementes erfährt dieses eine geringstmögliche Schädigung durch die einwirkende Kraft, welche eine Zugkraft ist. Das wiederum ermöglicht eine lange Funktionsdauer der Wandlervorrichtung und eine sichere Positionierung des Wandlerelementes in der Betriebsstellung.

Besonders bevorzugt ist das Übertragungselement um eine Schwenkachse schwenkbar, die parallel zur Längsachse angeordnet ist. Dadurch wird die Kraft aus dem Kraftspeicher besonders einfach auf das Wandlerelement übertragen. Der Kraftspeicher kann seine Kraft aus unterschiedlichen Richtungen auf das Übertragungselement ausüben und insbesondere in einer relativ zur Längsachse radialen Richtung darauf wirken. Durch die mögliche Schwenkung des Übertragungselementes kann dieses die Kraft optimal übersetzen und damit die Zuverlässigkeit der Rückstellvorrichtung erhöhen.

Besonders bevorzugt ist das Übertragungselement in der Betriebsstellung des Wandlerelementes an mindestens zwei Verbindungsbereichen am Wandlerelement angeordnet, welche in eine zur Längsachse parallele Richtung voneinander beabstandet sind. Durch die Kraftübertragung an einer Mehrzahl von Verbindungsbereichen des Wandlerelementes wird die homogene Flächenpressung und damit der Abstand zwischen Wandlerelementes und Objekt sichergestellt. Die Gefahr eines einseitigen Abhebens des Wandlerelementes vom Objekt, welche bei Vorliegen nur eines Verbindungsbereiches gegeben ist, wird durch diese Ausgestaltung verhindert. Dadurch ist eine erhöhte Funktionssicherheit gegeben.

Vorzugsweise hat das Wandlerelement in den Verbindungsbereichen Zugösen. In diese Zugösen greifen in der Betriebsstellung Haken, Stifte oder dergleichen Elemente des Übertragungselementes ein und üben eine Kraft auf das Wandlerelement aus. Durch die Ausgestaltung der Ösen als Krafteinleitungspunkt ist die Wandlervorrichtung und somit die Sensorvorrichtung besonders einfach montierbar, da die Ösen lediglich auf einen Bereich des Übertragungselementes aufgesteckt werden müssen.

Bevorzugt ist das Wandlerelement als biegsame Kunststoffplatine mit dem Leiterelement ausgebildet. Diese Form der Ausgestaltung ermöglicht eine besonders homogene Abdeckung des Objektes in der Betriebsstellung. Vorzugsweise besteht die Kunststoffplatine überwiegend aus einem Polyimid. Die hohe Hitzebeständigkeit sowie die über einen weiten Temperaturbereich weitgehend gleichbleibende Elastizität sorgen für eine hohe Funktionssicherheit der Sensorvorrichtung, unabhängig von Umgebungs- und Objekttemperaturen. Die Verwendung einer Kunststoffplatine ermöglicht eine Vielzahl unterschiedlicher Konfigurationen des zumindest einen Leiterelementes. Dieses ist bevorzugt mäanderförmig oder vollumfänglich umlaufend auf der Kunststoffplatine angeordnet, insbesondere sind eine Mehrzahl von Leiterelementen übereinander positioniert.

In einer vorteilhaften Ausgestaltung der Erfindung verläuft das Wandlerelement in der Betriebsstellung in tangentialer Richtung um wenigstens 45°, insbesondere um wenigstens 90° um die Längsachse. Mit diesem minimalen Ausmaß der Abdeckung des Objektes in dessen Umfangsrichtung wird für die Sensorvorrichtung eine besonders hohe Funktionssicherheit realisiert.

Weitere Einzelheiten und Vorteile der Erfindung sind den nachfolgend beschriebenen, schematisch dargestellten Ausführungsbeispielen zu entnehmen; es zeigen:
- Fig. 1: eine Wandlervorrichtung in einer Übersichtsdarstellung,
- Fig. 2: die Wandlervorrichtung in einer Übersichtsdarstellung aus einer bezüglich Fig. 1 gegenüberliegenden Perspektive,
- Fig. 3: eine Trägervorrichtung mit Klemmeinrichtungen in einer Klemmstellung in einer Übersichtsdarstellung,
- Fig. 4: die Trägervorrichtung mit den Klemmeinrichtungen außerhalb der Klemmstellung in einer Übersichtsdarstellung,
- Fig. 5: die Trägervorrichtung mit zwei Wandlervorrichtungen, jeweils in montiertem Zustand, in einer Übersichtsdarstellung,
- Fig. 6: eine Magnetisierungseinrichtung in einer Übersichtsdarstellung,
- Fig. 7: die Trägervorrichtung mit zwei Wandlervorrichtungen und drei Magnetisierungseinrichtungen, jeweils in montiertem Zustand, in einer Übersichtsdarstellung,
- Fig. 8: die Trägervorrichtung mit zwei Wandlervorrichtungen und fünf Magnetisierungseinrichtungen, jeweils in montiertem Zustand, in einer Übersichtsdarstellung,
- Fig. 9: eine erfindungsgemäße Sensorvorrichtung mit einem Gehäuse in einer Übersichtsdarstellung.

Die nachfolgend erläuterten Merkmale der erfindungsgemäßen Ausführungsbeispiele können auch einzeln oder in anderen Kombinationen als dargestellt oder beschrieben Gegenstand der Erfindung sein, stets aber zumindest in Kombination mit den Merkmalen des Anspruchs 1 oder denen des Anspruchs 2. Sofern sinnvoll, sind funktional gleichwirkende Teile mit identischen Bezugsziffern versehen.

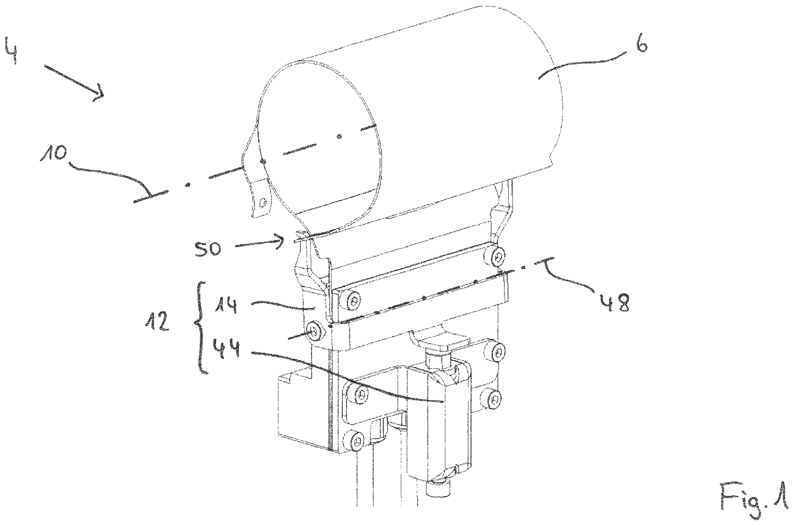

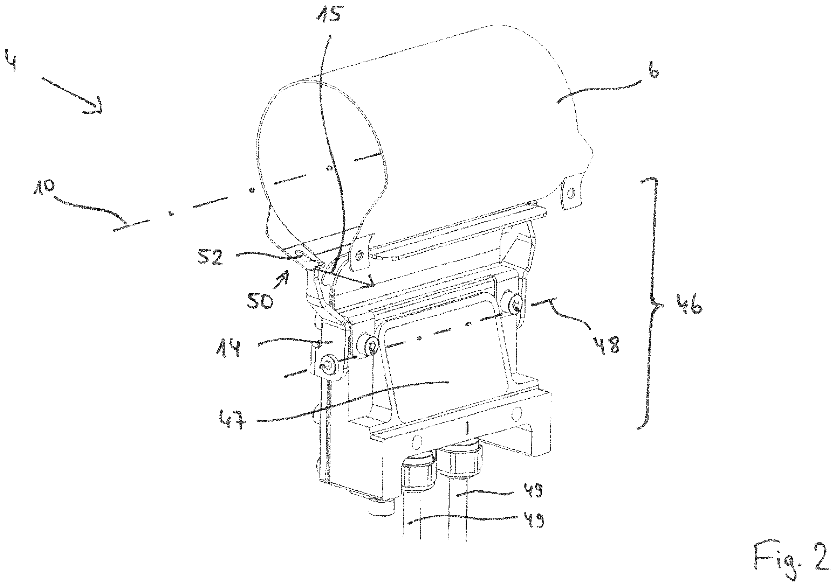

Fig. 1 und Fig. 2 zeigen eine Wandlervorrichtung 4 mit einem biegsamen Wandlerelement 6. Das Wandlerelement 6 weist ein elektrisch leitfähiges Leiterelement auf und ist zur abschnittsweisen Abdeckung eines Objektes in die dargestellte Betriebsstellung überführbar. Darin ist das Wandlerelement 6 um eine Längsachse 10 angeordnet. Die Wandlervorrichtung 4 weist eine Rückstellvorrichtung 12 mit einem Übertragungselement 14 sowie einem Kraftspeicher 44 auf, durch die das Wandlerelement 6 in die Betriebsstellung eingestellt und/oder rückgestellt wird.

Die Wandlervorrichtung 4 umfasst eine Anschlussvorrichtung 46, durch die das Wandlerelement 6 klemmend festgelegt ist. Die Rückstellvorrichtung 12 ist gegenüber der Anschlussvorrichtung 46 abgestützt. Das Übertragungselement 14 beaufschlagt das Wandlerelement 6 mit einer Kraft in im Wesentlichen tangentialer Richtung 15 (vgl. Fig. 2). Dazu ist das Übertragungselement 14 um eine parallel zur Längsachse 10 angeordnete Schwenkachse 48 schwenkbar gelagert. Innerhalb eines Vergussbereiches 47 ist das Leiterelement mit ein etwaiges Signal weiterleitenden Elementen verbunden, welche schließlich in an die Wandlervorrichtung anzuschließende Anschlusselemente 49 münden. Der Innenraum des Vergussbereichs 47 ist dabei mit einem Kunststoffmaterial vergossen.

Das Wandlerelement 6 weist zwei in eine zur Längsachse 10 parallele Richtung voneinander beabstandete Verbindungsbereiche 50 auf, in denen das Wandlerelement 6 Zugösen 52 ausbildet. Das Wandlerelement 6 verläuft in der dargestellten Betriebsstellung in tangentialer Richtung um wenigsten 270° um die Längsachse 10 der Sensorvorrichtung 2.

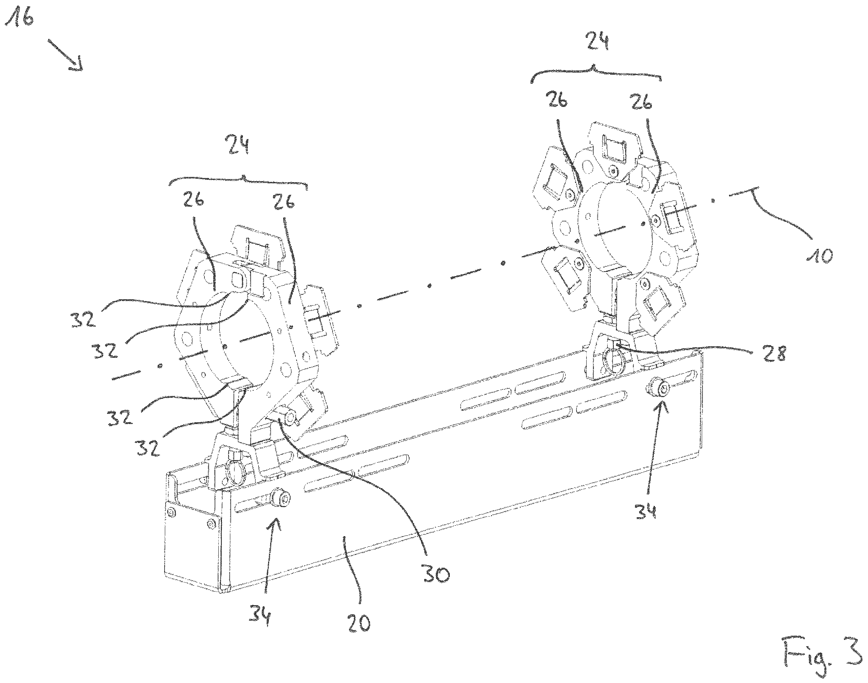

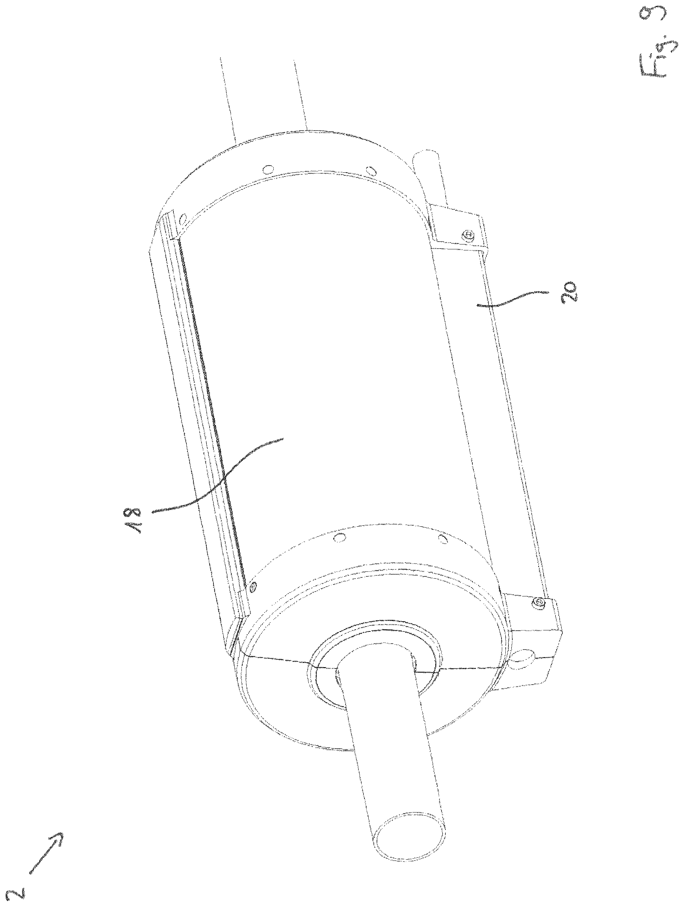

Fig. 3 zeigt eine lösbar an der Wandlervorrichtung 4 festlegbare Trägervorrichtung 16 zur Abstützung der Sensorvorrichtung 2 am Objekt. Fig. 9 zeigt darüber hinaus ein die Wandlervorrichtung 4 und die Trägervorrichtung 16 umgebendes Gehäuse 18. Das Gehäuse 18 hat in Richtung der Längsachse 10 eine größere Erstreckung als die Trägervorrichtung 16. Innerhalb des Gehäuses 18 ist ein wärmeisolierendes Isoliermittel angeordnet.

Die Trägervorrichtung 16 (vgl. Fig. 3, 4 und 5) hat eine die Wandlervorrichtung 4 zumindest teilweise umschließende Aufnahmeeinrichtung 20, welche einen Teil der Anschlussvorrichtung 46 aufnimmt. Das Gehäuse 18 wird durch die Aufnahmeeinrichtung 20 mitausgebildet (vergl. Fig. 9). Durch die Wandlervorrichtungen 4 und die Aufnahmeeinrichtung 20 werden Wandlerführungsanordnungen ausgebildet, durch die die Wandlervorrichtungen 4 relativ zur Aufnahmeeinrichtung 20 parallel zur Längsachse 10 verschiebbar und fixierbar sind. Aus der Aufnahmeeinrichtung 20 führt ein Kunststoffschutzschlauch 51, der die Anschlusselemente 49, welche an die Anschlussvorrichtungen 46 angeschlossen sind, beinhaltet und vor Umwelteinflüssen schützt.

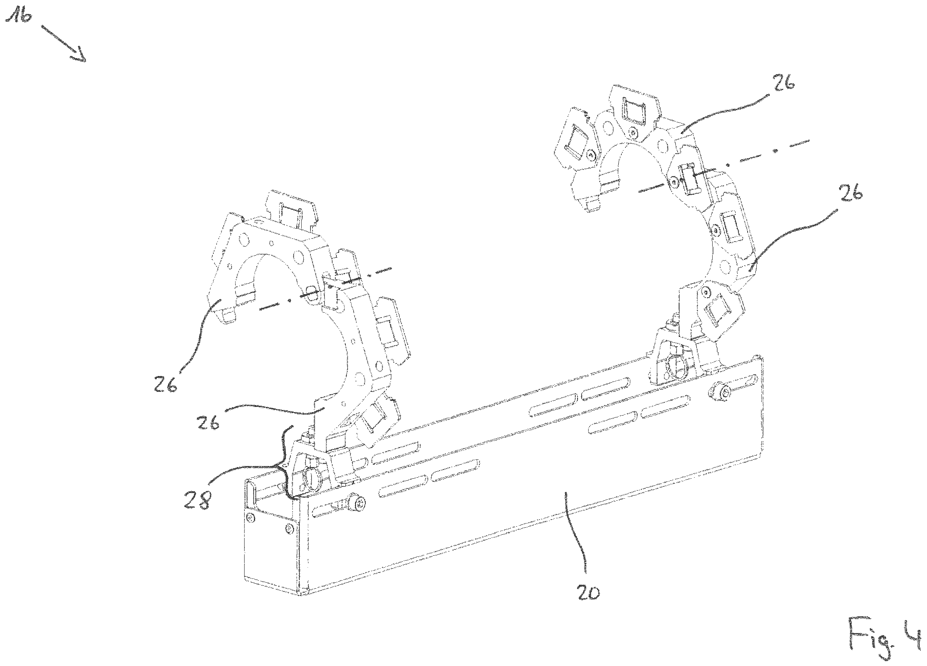

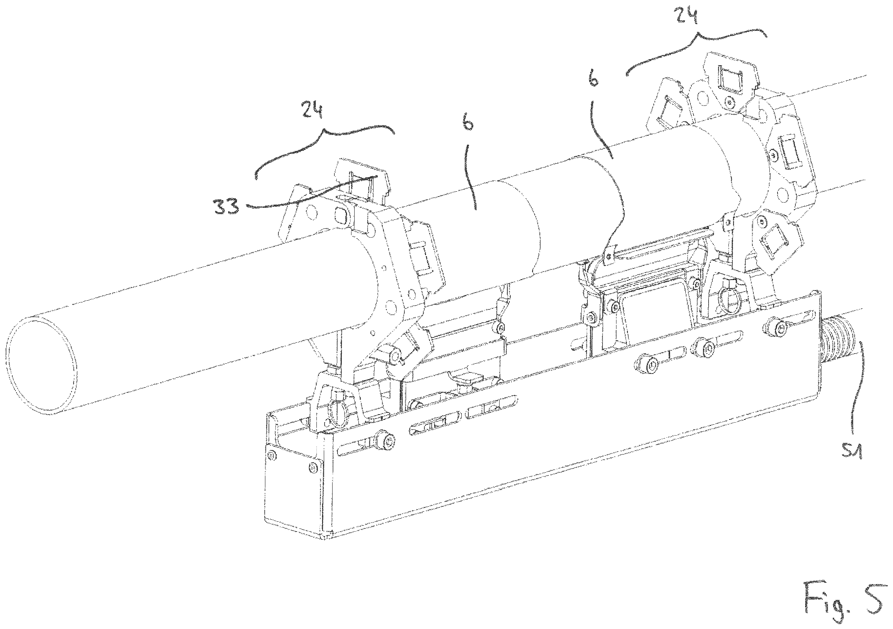

Die Trägervorrichtung 16 weist zwei Klemmeinrichtungen 24 zur lösbaren Festlegung der Sensorvorrichtung 2 am Objekt auf (vgl. Fig. 5). Fig. 3 zeigt die Klemmeinrichtungen 24 in ihrer Klemmstellung, Fig. 4 zeigt die Klemmeinrichtungen 24 in einer geöffneten Stellung.

Die Klemmeinrichtungen 24 bestehen aus zwei Klemmelementen 26. Die beiden Klemmelemente 26, die jeweils eine Klemmeinrichtung 24 ausbilden, sind relativ zueinander schwenkbar angeordnet. Die Klemmeinrichtung 24 umfasst eine die Klemmelemente 26 nach deren Überführung in die Klemmstellung verrastende Rastanordnung 28. Zusätzlich umfasst die Klemmeinrichtung 24 eine die Klemmelemente 26 vorspannende Vorspannvorrichtung 30, die eine Spannschraube aufweist, welche die Klemmelemente 26 in einer zur Längsachse 10 tangentialen Richtung verspannt. Jedes Klemmelement 26 hat zwei Klemmstege 32 zur Abstützung der Klemmeinrichtung 24 am Objekt.

Durch die Klemmeinrichtung 24 und die Aufnahmeeinrichtung 20 wird eine Aufnahmeführungsanordnung 34 ausgebildet. Durch diese sind die Klemmeinrichtungen 24 relativ zur Aufnahmeeinrichtung 20 parallel zur Längsachse 10 verschiebbar und fixierbar.

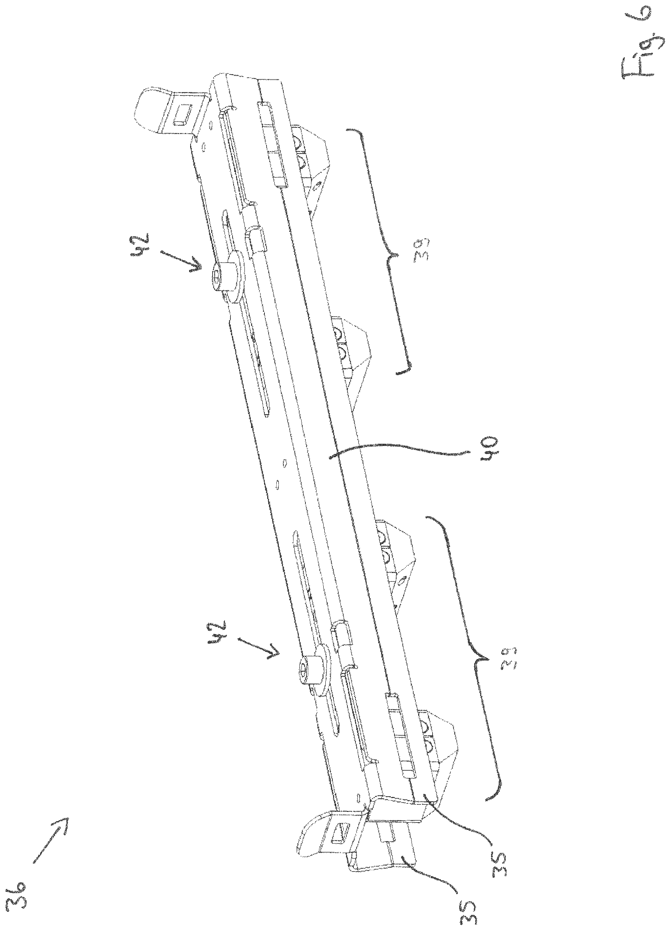

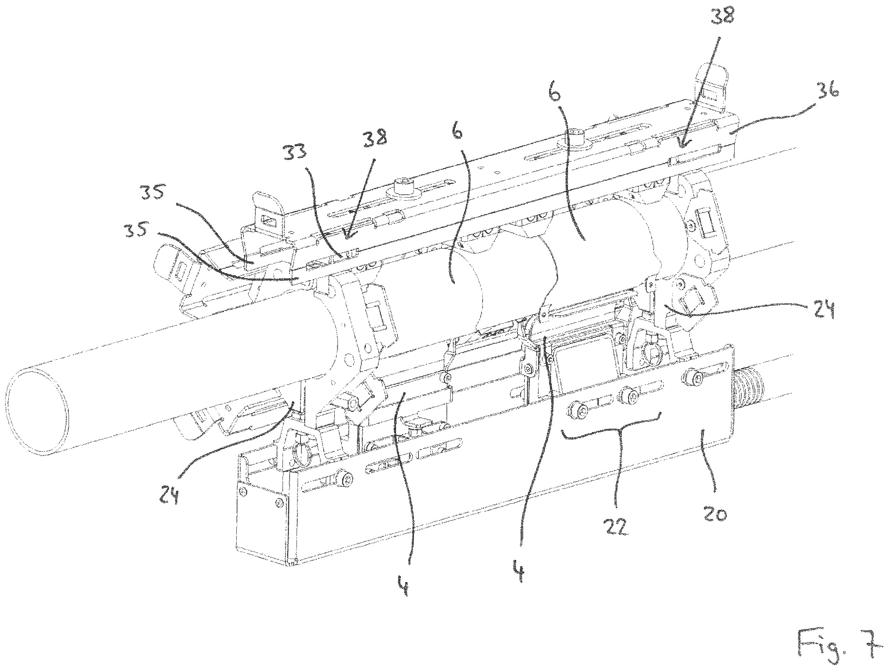

Fig. 6 zeigt eine Magnetisierungseinrichtung 36 zur Erzeugung eines statischen oder quasi-statischen Magnetfeldes. Die Magnetisierungseinrichtung 36 ist mittels zweier Klemmverbindungen 38 an der Trägervorrichtung 16 festlegbar (vgl. Fig. 7). Zur Festlegung wird die Magnetisierungseinrichtung 36 in radialer Richtung auf die Trägervorrichtung 16 zu bewegt. Während der Bewegung weichen zwei elastische Flügelelemente 35 einem Klemmsteg 33 an jeder Klemmeinrichtung 24 zunächst automatisch aus und bewegen sich schließlich zurück in eine geklemmte Stellung, aus der ein Lösen der Magnetisierungseinrichtung 36 nur unter signifikantem Kraftaufwand, durch den die Flügelelemente 35 voneinander wegbewegt werden, möglich ist.

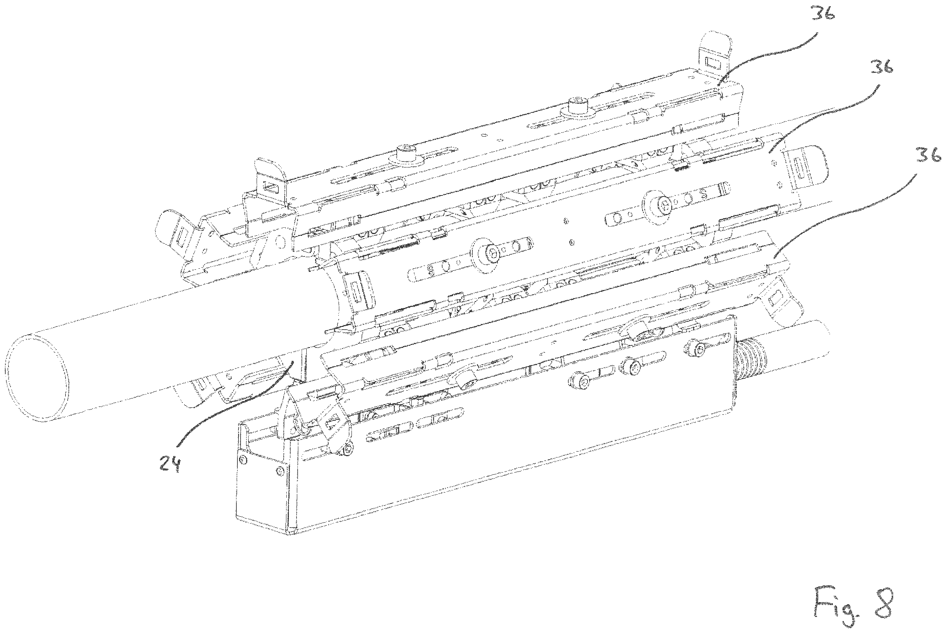

Die Magnetisierungseinrichtung 36 hat zwei Magneten 39, die in einer zur Längsachse 10 parallelen Richtung voneinander beabstandet sind. Beide Magneten 39 sind an einem Magnetträger 40 festgelegt. Jeder Magnet 39 und der Magnetträger 40 bilden eine Magnetführungsanordnung 42 aus. Diese umfasst ein sich parallel zur Längsachse 10 erstreckendes Langloch sowie eine Befestigungsschraube. Dadurch sind die Magneten 38 relativ zum Magnetträger 40 in eine zur Längsachse 10 parallele Richtung verschiebbar und fixierbar. Fig. 8 zeigt fünf relativ zur Längsachse 10 in Umfangsrichtung voneinander beabstandete Magnetisierungseinrichtungen 36, die das Objekt umgebend an der Klemmeinrichtung 24 angeordnet sind.

## Patentansprüche

1. Sensorvorrichtung (2) zur Montage an einem von einem Medium durchströmten Objekt, insbesondere an einer Pipeline, umfassend wenigstens eine Wandlervorrichtung (4) mit zumindest einem biegsamen Wandlerelement (6), das wenigstens ein elektrisch leitfähiges Leiterelement aufweist und zur abschnittsweisen Abdeckung des Objektes in eine Betriebsstellung überführbar ist, in der es zumindest teilweise um eine Längsachse (10) des Objektes angeordnet ist und straff an einer Oberfläche des Objektes anliegt,
**dadurch gekennzeichnet, dass** die Wandlervorrichtung (4) eine einen Kraftspeicher (44) aufweisende Rückstellvorrichtung (12) mit zumindest einem am Wandlerelement (6) angeordneten Übertragungselement (14) aufweist, wobei die Rückstellvorrichtung (12) zum Einstellen und/oder Rückstellen des Wandlerelementes (6) in die Betriebsstellung bei Veränderungen des Durchmessers des Objektes im montierten Zustand der Sensorvorrichtung (2) vorgesehen ist.

2. Sensorvorrichtung nach Anspruch 1,
**gekennzeichnet durch** eine lösbar an der Wandlervorrichtung (4) festgelegte Trägervorrichtung (16) zur Abstützung der Sensorvorrichtung (2) am Objekt und ein die Wandlervorrichtung (4) zumindest teilweise umgebendes Gehäuse (18), wobei die Trägervorrichtung (16) zumindest eine in eine Klemmstellung überführbare, zumindest zwei Klemmelemente (26) umfassende und zumindest zwei Klemmstege (32) zur Abstützung der Klemmeinrichtung (24) an dem Objekt aufweisende Klemmeinrichtung (24) zur lösbaren Festlegung der Sensorvorrichtung (2) am Objekt aufweist.

3. Sensorvorrichtung nach Anspruch 2, **dadurch gekennzeichnet, dass** das Gehäuse (18) zur Umgebung der Wandlervorrichtung (4) und der Längsachse (10) in Umfangsrichtung um mindestens 180° ausgebildet ist.

4. Sensorvorrichtung nach Anspruch 2 oder 3, **dadurch gekennzeichnet, dass** das Gehäuse (18) in Richtung der Längsachse (10) eine größere Erstreckung hat als die Trägervorrichtung (16).

5. Sensorvorrichtung nach einem der Ansprüche 2 bis 4, **dadurch gekennzeichnet, dass** die Trägervorrichtung (16) eine die Wandlervorrichtung (4) zumindest teilweise umschließende Aufnahmeeinrichtung (20) aufweist.

6. Sensorvorrichtung nach Anspruch 5, **dadurch gekennzeichnet, dass** das Gehäuse (18) von der Aufnahmeeinrichtung (20) der Trägervorrichtung (16) mitausgebildet wird.

7. Sensorvorrichtung nach Anspruch 5 oder 6, **dadurch gekennzeichnet, dass** durch die Wandlervorrichtung (4) und die Trägervorrichtung (16), insbesondere die Aufnahmeinrichtung (20), eine Wandlerführungsanordnung (22) dergestalt ausgebildet ist, dass sie relativ zueinander parallel zur Längsachse (10) verschiebbar und fixierbar sind.

8. Sensorvorrichtung nach einem der Ansprüche 2 bis 7, **dadurch gekennzeichnet, dass** innerhalb des Gehäuses (18) ein wärmeisolierendes Isoliermittel angeordnet ist.

9. Sensorvorrichtung nach einem der Ansprüche 2 bis 8,
**dadurch gekennzeichnet, dass** das erste Klemmelement (26) relativ zum zweiten Klemmelement (26) schwenkbar angeordnet ist.

10. Sensorvorrichtung nach Anspruch 9, **dadurch gekennzeichnet, dass** die Klemmeinrichtung (24) eine die Klemmelemente (26) nach deren Überführung in die Klemmstellung relativ zueinander verrastende Rastanordnung (28) und insbesondere eine die Klemmelemente (26) vorspannende Vorspannvorrichtung (30), umfasst.

11. Sensorvorrichtung nach einem der Ansprüche 2 bis 10 unter Einschluss von Anspruch 5 oder 6, **dadurch gekennzeichnet, dass** durch die Klemmeinrichtung (24) und die Aufnahmeeinrichtung (20) eine Aufnahmeführungsanordnung (34) dergestalt ausgebildet ist, dass sie relativ zueinander parallel zur Längsachse (10) verschiebbar und fixierbar sind.

12. Sensorvorrichtung nach einem der Ansprüche 1 bis 11, **gekennzeichnet durch** zumindest eine Magnetisierungseinrichtung (36) zur Erzeugung eines statischen oder quasi-statischen Magnetfeldes.

13. Sensorvorrichtung nach Anspruch 12, **dadurch gekennzeichnet, dass** die Magnetisierungseinrichtung (36) insbesondere mittels zumindest einer Klemmverbindung (38) lösbar an der Trägervorrichtung (16) festgelegt ist.

14. Sensorvorrichtung nach Anspruch 12 oder 13, **dadurch gekennzeichnet, dass** die Magnetisierungseinrichtung (36) mindestens einen, insbesondere mindestens zwei in einer zur Längsachse (10) parallelen Richtung voneinander beabstandete Magneten (39) aufweist.

15. Sensorvorrichtung nach Anspruch 14, **dadurch gekennzeichnet, dass** durch den Magneten (39) und einen Magnetträger (40) der Magnetisierungseinrichtung (36) eine Magnetführungsanordnung (42) dergestalt ausgebildet ist, dass sie relativ zueinander parallel zur Längsachse (10) verschiebbar und fixierbar sind.

16. Sensorvorrichtung nach einem der Ansprüche 12 bis 15, **dadurch gekennzeichnet, dass** zumindest zwei, insbesondere zumindest vier relativ zur Längsachse (10) in Umfangsrichtung voneinander beabstandete Magnetisierungseinrichtungen (36) an der Klemmeinrichtung (24) angeordnet sind.

17. Sensorvorrichtung nach einem der vorhergehenden Ansprüche, **dadurch gekennzeichnet, dass** die Wandlervorrichtung (4) eine das Wandlerelement (6) klemmend festlegende Anschlussvorrichtung (46) umfasst.

18. Sensorvorrichtung nach einem der vorhergehenden Ansprüche, **gekennzeichnet durch** zumindest zwei in einer zur Längsachse (10) parallelen Richtung voneinander beabstandeten Wandlervorrichtungen (4).

19. Sensorvorrichtung nach einem der vorhergehenden Ansprüche unter Einschluss von Anspruch 1, **dadurch gekennzeichnet, dass** das Übertragungselement (14) das Wandlerelement (6) mit einer Kraft in im Wesentlichen tangentialer Richtung beaufschlagend an der Wandlervorrichtung (4) angeordnet ist.

20. Sensorvorrichtung nach einem der vorhergehenden Ansprüche unter Einschluss von Anspruch 1, **dadurch gekennzeichnet, dass** das Übertragungselement (14) um eine parallel zur Längsachse (10) angeordnete Schwenkachse (48) schwenkbar angeordnet ist.

21. Sensorvorrichtung nach einem der vorhergehenden Ansprüche unter Einschluss von Anspruch 1, **dadurch gekennzeichnet, dass** das Übertragungselement (14) in Betriebsstellung des Wandlerelementes (6) an mindestens zwei in eine zur Längsachse (10) parallele Richtung voneinander beabstandeten Verbindungsbereichen (50) am Wandlerelement (6) angeordnet ist.

22. Sensorvorrichtung nach Anspruch 21, **dadurch gekennzeichnet, dass** das Wandlerelement (6) in den Verbindungsbereichen (50) Zugösen (52) ausbildend ausgestaltet ist.

23. Sensorvorrichtung nach einem der vorhergehenden Ansprüche, **dadurch gekennzeichnet, dass** das Wandlerelement (6) als biegsame Kunststoffplatine mit dem Leiterelement (8) ausgebildet ist.

24. Sensorvorrichtung nach einem der vorhergehenden Ansprüche, **dadurch gekennzeichnet, dass** das Wandlerelement (6) in der Betriebsstellung in tangentialer Richtung um wenigstens 45°, insbesondere um wenigstens 90° um die Längsachse (10) verlaufend angeordnet ist.

## Claims

1. Sensor device (2) for mounting on an object through which a medium flows, in particular on a pipeline, comprising at least one transducer device (4) having at least one flexible transducer element (6), which has at least one electrically conductive conductor element and, in order to cover the object in part, can be transferred into an operating position in which it is at least partially arranged around a longitudinal axis (10) of the object and lies tightly against a surface of the object, **characterized in that** the transducer device (4) has a restoring device (12) having an energy store (44) and at least one transfer element (14) arranged on the transducer element (6), the restoring device (12) being intended for setting and/or resetting the transducer element (6) into the operating position when there are changes in the diameter of the object in the mounted state of the sensor device (2).

2. Sensor device according to Claim 1,
**characterized by**
a carrier device (16), which is detachably fixed on the transducer device (4) for supporting the sensor device (2) on the object, and a housing (18), which at least partially surrounds the transducer device (4), the carrier device (16) having at least one clamping device (24), which is intended for detachably fixing the sensor device (2) on the object, can be transferred into a clamping position, comprises at least two clamping elements (26) and has at least two clamping webs (32) for supporting the clamping device (24) on the object.

3. Sensor device according to Claim 2, **characterized in that** the housing (18) is designed for surrounding the transducer device (4) and the longitudinal axis (10) by at least 180° in the circumferential direction.

4. Sensor device according to Claim 2 or 3, **characterized in that** the housing (18) has a greater extent in the direction of the longitudinal axis (10) than the carrier device (16).

5. Sensor device according to one of Claims 2 to 4, **characterized in that** the carrier device (16) has a holding device (20), which at least partially encloses the transducer device (4).

6. Sensor device according to Claim 5, **characterized in that** the housing (18) is partly formed by the holding device (20) of the carrier device (16).

7. Sensor device according to Claim 5 or 6, **characterized in that** a transducer guiding assembly (22) is formed by the transducer device (4) and the carrier device (16), in particular the holding device (20), in such a way that they can be displaced and fixed relative to one another parallel to the longitudinal axis (10).

8. Sensor device according to one of Claims 2 to 7, **characterized in that** a thermally insulating insulation material is arranged within the housing (18).

9. Sensor device according to one of Claims 2 to 8, **characterized in that** the first clamping element (26) is arranged pivotably relative to the second clamping element (26).

10. Sensor device according to Claim 9, **characterized in that** the clamping device (24) comprises a latching assembly (28), which latches the clamping elements (26) relative to one another after they have been transferred into the clamping position, and in particular a pretensioning device (30), which pre-tensions the clamping elements (26).

11. Sensor device according to one of Claims 2 to 10 with the inclusion of Claim 5 or 6, **characterized in that** a holder guiding assembly (34) is formed by the clamping device (24) and the holding device (20) in such a way that they can be displaced and fixed relative to one another parallel to the longitudinal axis (10).

12. Sensor device according to one of Claims 1 to 11, **characterized by** at least one magnetizing device (36) for generating a static or quasi-static magnetic field.

13. Sensor device according to Claim 12, **characterized in that** the magnetizing device (36) is detachably fixed on the carrier device (16), in particular by means of at least one clamping connection (38).

14. Sensor device according to Claim 12 or 13, **characterized in that** the magnetizing device (36) has at least one magnet (39), in particular at least two magnets (39), which are spaced apart from one another in a direction parallel to the longitudinal axis (10).

15. Sensor device according to Claim 14, **characterized in that** a magnet guiding assembly (42) is formed by the magnet (39) and a magnet carrier (40) of the magnetizing device (36) in such a way that they can be displaced and fixed relative to one another parallel to the longitudinal axis (10).

16. Sensor device according to one of Claims 12 to 15, **characterized in that** at least two, in particular at least four, magnetizing devices (36), which are spaced apart from one another in the circumferential direction relative to the longitudinal axis (10), are arranged on the clamping device (24).

17. Sensor device according to one of the preceding claims, **characterized in that** the transducer device (4) comprises a locating connection device (46), clamping the transducer element (6).

18. Sensor device according to one of the preceding claims, **characterized by** at least two transducer devices (4), which are spaced apart from one another in a direction parallel to the longitudinal axis (10).

19. Sensor device according to one of the preceding claims with the inclusion of Claim 1, **characterized in that** the transfer element (14) is arranged on the transducer device (4), applying a force to the transducer element (6) in a substantially tangential direction.

20. Sensor device according to one of the preceding claims with the inclusion of Claim 1, **characterized in that** the transfer element (14) is arranged pivotably about a pivot axis (48) arranged parallel to the longitudinal axis (10).

21. Sensor device according to one of the preceding claims with the inclusion of Claim 1, **characterized in that**, in the operating position of the transducer element (6), the transfer element (14) is arranged on the transducer element (6) at at least two connecting regions (50), which are spaced from one another in a direction parallel to the longitudinal axis (10).

22. Sensor device according to Claim 21, **characterized in that** the transducer element (6) is configured so as to form drawbar eyes in the connecting regions (50).

23. Sensor device according to one of the preceding claims, **characterized in that** the transducer element (6) is designed as a flexible plastic board having a conductor element (8).

24. Sensor device according to one of the preceding claims, **characterized in that**, in the operating position, the transducer element (6) is arranged so as to run in a tangential direction around the longitudinal axis (10) by at least 45°, in particular by at least 90°.

## Revendications

1. Dispositif capteur (2) pour le montage sur un objet traversé par un fluide, notamment sur un pipeline, comprenant au moins un dispositif transducteur (4) avec au moins un élément transducteur flexible (6), qui présente au moins un élément conducteur électriquement conducteur et qui peut être transféré pour le recouvrement en sections de l'objet dans une position d'exploitation, dans laquelle il est agencé au moins partiellement autour d'un axe longitudinal (10) de l'objet et s'applique de manière tendue sur une surface de l'objet,
**caractérisé en ce que** le dispositif transducteur (4) présente un dispositif de rappel (12) présentant un accumulateur de force (44) avec au moins un élément de transmission (14) agencé sur l'élément transducteur (6), le dispositif de rappel (12) étant prévu pour le réglage et/ou le rappel de l'élément transducteur (6) dans la position d'exploitation en cas de modifications du diamètre de l'objet à l'état monté du dispositif capteur (2) .

2. Dispositif capteur selon la revendication 1, **caractérisé par** un dispositif support (16) immobilisé de manière amovible sur le dispositif transducteur (4) pour soutenir le dispositif capteur (2) sur l'objet, et un boîtier (18) entourant au moins partiellement le dispositif transducteur (4), le dispositif support (16) présentant au moins un appareil de serrage (24) pouvant être transféré dans une position de serrage, comprenant au moins deux éléments de serrage (26) et présentant au moins deux nervures de serrage (32) pour soutenir l'appareil de serrage (24) sur l'objet, pour immobiliser de manière amovible le dispositif capteur (2) sur l'objet.

3. Dispositif capteur selon la revendication 2, **caractérisé en ce que** le boîtier (18) est configuré pour entourer le dispositif transducteur (4) et l'axe longitudinal (10) sur au moins 180° dans la direction circonférentielle.

4. Dispositif capteur selon la revendication 2 ou 3, **caractérisé en ce que** le boîtier (18) a, dans la direction de l'axe longitudinal (10), une extension plus grande que le dispositif support (16).

5. Dispositif capteur selon l'une quelconque des revendications 2 à 4, **caractérisé en ce que** le dispositif support (16) présente un appareil de réception (20) enfermant au moins partiellement le dispositif transducteur (4).

6. Dispositif capteur selon la revendication 5, **caractérisé en ce que** le boîtier (18) est également formé par l'appareil de réception (20) du dispositif support (16) .

7. Dispositif capteur selon la revendication 5 ou 6, **caractérisé en ce que** le dispositif transducteur (4) et le dispositif support (16), notamment l'appareil de réception (20), forment un agencement de guidage de transducteur (22) de telle sorte qu'ils peuvent être déplacés et fixés l'un par rapport à l'autre parallèlement à l'axe longitudinal (10).

8. Dispositif capteur selon l'une quelconque des revendications 2 à 7, **caractérisé en ce qu'**un moyen d'isolation thermique est agencé à l'intérieur du boîtier (18) .

9. Dispositif capteur selon l'une quelconque des revendications 2 à 8, **caractérisé en ce que** le premier élément de serrage (26) est agencé de manière à pouvoir pivoter par rapport au deuxième élément de serrage (26).

10. Dispositif capteur selon la revendication 9, **caractérisé en ce que** l'appareil de serrage (24) comprend un agencement d'encliquetage (28) encliquetant les éléments de serrage (26) l'un par rapport à l'autre après leur transfert dans la position de serrage et notamment un dispositif de précontrainte (30) précontraignant les éléments de serrage (26).

11. Dispositif capteur selon l'une quelconque des revendications 2 à 10, y compris la revendication 5 ou 6, **caractérisé en ce que** l'appareil de serrage (24) et l'appareil de réception (20) forment un agencement de guidage de réception (34) de telle sorte qu'ils peuvent être déplacés et fixés l'un par rapport à l'autre parallèlement à l'axe longitudinal (10).

12. Dispositif capteur selon l'une quelconque des revendications 1 à 11, **caractérisé par** au moins un appareil d'aimantation (36) pour générer un champ magnétique statique ou quasi-statique.

13. Dispositif capteur selon la revendication 12, **caractérisé en ce que** l'appareil d'aimantation (36) est immobilisé de manière amovible sur le dispositif support (16), notamment au moyen d'au moins une liaison de serrage (38).

14. Dispositif capteur selon la revendication 12 ou 13, **caractérisé en ce que** l'appareil d'aimantation (36) présente au moins un, notamment au moins deux aimants espacés l'un de l'autre dans une direction parallèle à l'axe longitudinal (10).

15. Dispositif capteur selon la revendication 14, **caractérisé en ce que** les aimants (39) et un support d'aimant (40) de l'appareil d'aimantation (36) forment un agencement de guidage d'aimant (42) de telle sorte qu'ils peuvent être déplacés et fixés l'un par rapport à l'autre parallèlement à l'axe longitudinal (10).

16. Dispositif capteur selon l'une quelconque des revendications 12 à 15, **caractérisé en ce qu'**au moins deux, notamment au moins quatre appareils d'aimantation (36) espacés les uns des autres dans la direction circonférentielle par rapport à l'axe longitudinal (10) sont agencés sur l'appareil de serrage (24).

17. Dispositif capteur selon l'une quelconque des revendications précédentes, **caractérisé en ce que** le dispositif transducteur (4) comprend un dispositif de raccordement (46) qui immobilise l'élément transducteur (6) par serrage.

18. Dispositif capteur selon l'une quelconque des revendications précédentes, **caractérisé par** au moins deux dispositifs transducteurs (4) espacés l'un de l'autre dans une direction parallèle à l'axe longitudinal (10).

19. Dispositif capteur selon l'une quelconque des revendications précédentes, y compris la revendication 1, **caractérisé en ce que** l'élément de transmission (14) est agencé sur le dispositif transducteur (4) en appliquant une force à l'élément transducteur (6) dans une direction essentiellement tangentielle.

20. Dispositif capteur selon l'une quelconque des revendications précédentes, y compris la revendication 1, **caractérisé en ce que** l'élément de transmission (14) est agencé de manière à pouvoir pivoter autour d'un axe de pivotement (48) agencé parallèlement à l'axe longitudinal (10).

21. Dispositif capteur selon l'une quelconque des revendications précédentes, y compris la revendication 1, **caractérisé en ce que** l'élément de transmission (14) est agencé, en position d'exploitation de l'élément transducteur (6), sur l'élément transducteur (6) sur au moins deux zones de liaison (50) espacées l'une de l'autre dans une direction parallèle à l'axe longitudinal (10) .

22. Dispositif capteur selon la revendication 21, **caractérisé en ce que** l'élément transducteur (6) est conçu en formant des œillets de traction (52) dans les zones de liaison (50).

23. Dispositif capteur selon l'une quelconque des revendications précédentes, **caractérisé en ce que** l'élément transducteur (6) est configuré sous forme de platine plastique flexible avec l'élément conducteur (8).

24. Dispositif capteur selon l'une quelconque des revendications précédentes, **caractérisé en ce que** l'élément transducteur (6), dans la position d'exploitation, est agencé en s'étendant dans la direction tangentielle sur au moins 45°, notamment sur au moins 90°, autour de l'axe longitudinal (10).
